# FASCICULE DE BREVET EUROPEEN

(11) **EP 4 031 323 B1**
(45) Date de publication et mention de la délivrance du brevet: **01.04.2026**
(21) Numéro de dépôt: 20772051.7
(22) Date de dépôt: 14.09.2020
(51) Int. Cl.: B23Q 1/44, B23Q 1/60, B23Q 1/62, B23B 29/24

(54) **PEIGNE POUR MACHINES-OUTILS, DISPOSITIF DE POSITIONNEMENT D'OUTIL, DISPOSITIF D'ENTRAINEMENT D'OUTIL ROTATIFS AINSI QU'UNE MACHINE-OUTIL**
KLEMMBLOCK FÜR WERKZEUGMASCHINEN, WERKZEUGPOSITIONIERUNGSVORRICHTUNG, DREHANTRIEBSVORRICHTUNG UND WERKZEUGMASCHINE
CLAMPING BLOCK FOR MACHINE TOOLS, TOOL POSITIONING DEVICE, ROTARY TOOL DRIVE DEVICE, AND MACHINE TOOL

(30) Priorité: 16.09.2019 CH 11662019
(43) Date de publication de la demande: 27.07.2022
(73) Titulaire: Tornos SA, 2740 Moutier (CH)
(72) Inventeur: DROZ, Fabrice, 2720 Tramelan (CH); NEUKOMM, Alexandre, 2842 Rossemaison (CH); RAIS, Kevin, 2503 Biel/Bienne (CH)
(74) Mandataire: BOVARD AG
(86) Numéro de dépôt international: PCT/EP2020/075656
(87) Numéro de publication internationale: WO 2021/052911

(56) Documents cités:
- EP-A1- 0 972 608
- EP-A1- 1 911 551
- JP-A- 2006 192 558
- JP-A- 2011 000 693
- JP-A- 2012 210 690
- JP-A- H0 890 303

## Description

### Domaine technique de l'invention

La présente invention se rapporte au domaine des machines-outils, plus particulièrement au domaine des tours, par exemple des tours automatiques. Plus précisément, la présente invention se rapporte selon un premier aspect à un dispositif de positionnement d'outils pour machines-outils. Elle se rapporte plus précisément à un dispositif de positionnement d'outils qui permet un positionnement précis et rapide des outils par rapport à une barre à usiner sans qu'un moyen d'entrainement du dispositif n'ait besoin d'être déplacé lors du positionnement. Selon un deuxième aspect, la présente invention se rapporte à une machine-outil, par exemple à un tour automatique, comprenant un dispositif de positionnement d'outils selon la présente invention.

### État de la technique

Lors de l'usinage de pièces mécaniques par des machines-outils, en particulier par des machines-outils de précision tel que tours automatiques, il est primordial que les outils nécessaires à l'usinage de la pièce désirée puissent être positionnés de manière très précise par rapport à la barre à usiner. De nos jours, il est de plus nécessaire que ce positionnement puisse être effectué le plus rapidement possible afin de permettre de diminuer le temps d'usinage total ce qui permet finalement de réduire les coûts d'usinage et d'augmenter la cadence de production de pièces.

Les dispositifs de positionnement d'outils pour machines-outils connus de l'art antérieur comprennent normalement deux guidages linéaires indépendants pour le déplacement d'un ou plusieurs outils ou d'un chariot sur lequel les outils sont attachés. Les guidages linéaires des machines connues sont généralement orientés de préférence à angle droit l'un par rapport à l'autre et couplés à des moteurs respectifs permettant le déplacement des outils par rapport à la barre à usiner. En combinant les mouvements en translation des deux guidages linéaires, les outils peuvent être déplacés dans n'importe quelle direction dans un plan perpendiculaire à la barre.

Les dispositifs de positionnement de l'art antérieur ont cependant un désavantage majeur. En effet, les guidages linéaires sont disposés en « série » ce qui implique qu'un des deux guidages linéaires et son moteur respectif doivent être déplacés par l'autre guidage linéaire. Cela signifie qu'une masse importante, en particulier celle du moteur, doit toujours être déplacée lors du positionnement des outils. Ceci est désavantageux car cela implique un temps de déplacement important pour le positionnement des outils par rapport à la barre à usiner. Ceci limite finalement la cadence d'usinage. De plus, il est difficile de positionner les outils de manière précise lorsque ceux-ci sont déplacés à grande vitesse en raison de l'inertie importante d'un tel système. Finalement, les empilements d'axes, c'est-à-dire les axes montés en série, sont moins rigides que les structures parallèles.

Les machines-outils connues de l'art antérieur qui comprennent un dispositif de positionnement d'outil ne permettent pas un usinage de pièces de grande précision à très haute cadence. En effet, la masse et/ou les dimensions de cet élément limite la cadence et la précision d'usinage atteignable.

Il existe par conséquent un besoin pour un dispositif de positionnement d'outil et une machine-outil qui permettent d'augmenter la cadence d'usinage tout en garantissant une grande précision des pièces usinées.

Par ailleurs, un système de positionnement selon le préambule de la revendication 1 annexée est connu des documents EP 0 972 608 A1 et JP 2006 192558 A.

### Résumé de l'invention

Un but de la présente invention est de proposer un dispositif de positionnement d'outil et une machine-outil permettant de surmonter les limitations mentionnées préalablement.

Selon l'invention, ces buts sont atteints grâce à un système de positionnement d'outils selon la revendication 1 et à une machine-outil selon la revendication 9.

Les buts de l'invention sont atteints grâce à un système pour machines-outils de positionnement d'outils par rapport à la zone d'usinage comprenant un premier guidage linéaire droit et un deuxième guidage linéaire droit, les directions de translation associées au premier guidage linéaire droit et au deuxième guidage linéaire droit étant parallèles, et un chariot conçu pour recevoir des outils, le système de positionnement comprenant un premier guidage linéaire incliné attaché au premier guidage linéaire droit, la direction de translation associée au premier guidage linéaire incliné formant avec la direction de translation associée avec le premier guidage linéaire droit un angle plus grand que 0° et un deuxième guidage linéaire incliné attaché au deuxième guidage linéaire droit, la direction de translation associée au deuxième guidage linéaire incliné formant avec la direction de translation associée avec le deuxième guidage linéaire droit un angle plus grand que 0°, les directions de translation associées au premier guidage linéaire incliné et au deuxième guidage linéaire incliné formant un plan qui est parallèle à la direction de translation associée au premier guidage linéaire droit et au deuxième guidage linéaire droit, le système de positionnement comprenant un premier moyen d'entrainement prévu pour entrainer en translation le premier guidage linéaire incliné en agissant sur le premier guidage linéaire droit et un deuxième moyen d'entrainement prévu pour entrainer en translation le deuxième guidage linéaire incliné en agissant sur le deuxième guidage linéaire droit, le chariot étant attaché au premier guidage linéaire incliné et au deuxième guidage linéaire incliné, caractérisé en ce que le plan de translation du premier guidage linéaire droit et le plan de translation du deuxième guidage linéaire droit sont sécants.

Grâce à un tel dispositif de positionnement, il est possible de positionner les outils d'une machine-outil précisément et en un temps minimum par rapport à une barre à usiner. L'avantage majeur du dispositif de positionnement selon la présente invention est donné par le fait que les moyens d'entrainement, par exemple des moteur, nécessaires au positionnement sont arrangés typologiquement de manière parallèle et non en série comme dans les dispositifs connus de l'art antérieur. Grâce à un arrangement parallèle, aucun des moyens d'entrainement n'est déplacé lors du positionnement. Cela permet de prévoir un dispositif de positionnement dont la masse qui est déplacée lors du positionnement est fortement réduite par rapport aux dispositifs connus de l'art antérieur. Une masse inférieure garantit que le positionnement des outils peut se faire dans un temps minimum tout en garantissant une grande précision dans le positionnement. De plus, le fait que le chariot relie le premier guidage linéaire incliné avec le deuxième guidage linéaire incliné permet d'atteindre une rigidité plus grande et ainsi une précision d'usinage augmentée.

De plus, grâce à la combinaison des guidages linéaires droits et des guidages linéaires inclinés il est possible d'effectuer des déplacements selon n'importe quelle direction comprise dans le plan formé par les directions de translation associées aux premier et deuxième guidages linéaires droits.

Finalement, l'avantage de prévoir le plan de translation du premier guidage linéaire droit et le plan de translation du deuxième guidage linéaire droit sécants est donné par la compacité de la structure d'axes et de sa boucle des efforts, ce qui favorise sa rigidité et sa précision. La compacité amène de plus la légèreté, ce qui permet les hautes dynamiques, donc des cadences élevées. Bien que des plans sécants soient très favorables, il faut noter qu'il serait aussi possible de prévoir des plans de translation du premier guidage linéaire droit et du deuxième guidage linéaire droit parallèles mais non-confondus.

Selon un premier mode de réalisation préféré de ce premier aspect de la présente invention, l'angle formé par les directions de translation associées au premier guidage linéaire droit et au premier guidage linéaire incliné est plus grand que 20°, avantageusement plus grand que 30°, préférablement plus grand que ou égal à 45° et/ou dans lequel l'angle formé par la direction de translation associée au deuxième guidage linéaire droit et le deuxième guidage linéaire incliné est plus grand que 20°, avantageusement plus grand que 30°, préférablement plus grand que ou égal à 45°.

La conversion d'un déplacement selon le premier guidage linéaire droit en un déplacement perpendiculaire à ce dernier est proportionnelle à l'angle formé par les directions de translation associées au premier guidage linéaire droit et au premier guidage linéaire incliné. Un angle plus grand implique qu'un déplacement selon le premier guidage linéaire droit implique un déplacement plus important dans une direction perpendiculaire. Il en va de même pour ce qui est de l'angle formé par les directions de translation associées au deuxième guidage linéaire droit et au deuxième guidage linéaire incliné.

Selon un autre mode de réalisation préféré de la présente invention, l'angle entre la direction de translation associée au premier guidage linéaire incliné et la direction de translation associée au deuxième guidage linéaire incliné est entre 60° et 120°, de préférence entre 70° et 110°, avantageusement de 90°.Grâce à ces valeurs cela permet de varier la géométrie de la zone d'usinage dans le plan de translation du chariot et ainsi par exemple de fixer des outils à des endroits privilégiés. De plus, ces valeurs permettent une variation de résolution et dynamique : selon la valeur d'angle choisie, on obtient un effet de démultiplication/réduction entre la résolution/dynamique appliquée aux moteurs d'entrées et la résolution/dynamique obtenue au droit de l'outil en sortie de la cinématique, ceci dans certaines directions du plan de translation du chariot. Grâce à cet effet de démultiplication/réduction les efforts peuvent également être variés entre l'entrée et la sortie de la cinématique.

Selon un autre mode de réalisation préféré de la présente invention, le système de positionnement comprend un premier coulisseau entre le premier guidage linéaire droit et le premier guidage linéaire incliné et un deuxième coulisseau entre le deuxième guidage linéaire droit et le deuxième guidage linéaire incliné. La présence de coulisseaux entre les guidages linéaires droits et les guidages linéaires inclinés permet de prévoir un renvoi d'angle entre ces éléments. Grâce à ceci, il est possible d'orienter les guidages linéaires droits de telle sorte que le chariot du dispositif de positionnement, et donc les outils, puisse être à proximité immédiate du canon d'une machine-outil. Cela permet d'avoir des distances de positionnement plus courtes ce qui garantit un usinage à haute cadence et à haute dynamique.

Selon un autre mode de réalisation préféré de la présente invention, la droite sécante du plan de translation du premier guidage linéaire droit et du plan de translation du deuxième guidage linéaire droit intersecte la zone d'usinage de la machine-outil. Ceci permet de minimiser les bras de leviers, ce qui réduit les répercussions néfastes des erreurs géométriques des axes et des bâtis au point d'usinage. Cela permet donc de maximiser la précision de la structure d'axes au point d'usinage.

Selon un autre mode de réalisation préféré de la présente invention, le système de positionnement comprend des capteurs, pour mesurer la vitesse, l'accélération et/ou la position du premier guidage linéaire droit, du deuxième guidage linéaire droite, du premier guidage linéaire incliné, du deuxième guidage linéaire incliné et/ou du chariot. Grâce aux capteurs il est possible à tout moment de connaître la position exacte du chariot ou des outils. De plus si des capteurs de position sont prévus sur les guidages linéaires inclinés, il est possible de connaître la position absolue du chariot par rapport à la machine-outil, et donc des outils qui sont montés sur le chariot, sans devoir entreprendre de calibrage.

Selon un mode de réalisation préféré suivant de la présente invention, les capteurs sont des capteurs de type règle de mesure à balayage photoélectrique, interférométrique, accélérométrique, vélocimétrique, et/ou inclinométrique. Grâce à de tels capteurs toutes les informations utiles pour garantir un positionnement de haute précision sont disponibles. Il est ainsi possible d'augmenter la cadence d'usinage et déterminer par exemple quels les limites des paramètres de positionnement qui garantissent un usinage de qualité acceptable.

Selon un autre mode de réalisation préféré de la présente invention, lequel le chariot au moins partiellement composé d'un matériau possédant un ratio module Young sur masse volumique plus grand que 0.010, avantageusement plus grand que 0.015, de préférence plus que 0.020 lorsque le module de Young est exprimé en GPa et la masse volumique en kg/m³ et/ou possédant un facteur d'amortissement plus grand que 0.0010, avantageusement plus grand que 0.0015, de préférence plus grand que 0.0020. Ceci permet de garantir que le chariot est le plus léger possible tout en possédant une rigidité maximale. A noter que le facteur d'amortissement est de préférence déterminé en mesurant la réponse du matériau après avoir été frappé par un marteau d'impact. En prévoyant un chariot avec une masse minimale et une rigidité maximale, il est possible d'augmenter la dynamique, c'est-à-dire de diminuer le temps de positionnement tout en augmentant la précision du positionnement. Des matériaux adéquats peuvent être par exemple de la fonte ou de la fonte à graphite sphéroïdal, avantageusement de type EN-GJS-400. Des matériaux composites, par exemple des matériaux comprenant de la fibre et de la résine polyester, ainsi que le carbone, par exemple des fibres de carbone tisées, sont aussi adéquats pour la fabrication d'un chariot d'un système de positionnement selon la présente invention.

Les buts de l'invention sont également atteints grâce à une machine-outil comprenant un dispositif de positionnement d'outils selon la présente invention. Une telle machine-outil permet d'atteindre une haute cadence d'usinage tout en garantissant une haute précision des pièces usinées. Le dispositif de positionnement permet de déplacer dans n'importe quelle direction les outils en un temps minimum et avec une grande précision.

Selon un premier mode de réalisation préféré de ce deuxième aspect de la présente invention, la machine-outil comprend une poupée mobile pour l'entrainement en rotation d'une barre à usiner selon l'axe longitudinal de la barre à usiner. Grâce à la poupée mobile la barre à usiner peut être mise en rotation de manière simple mais précise.

Selon encore un autre mode réalisation préféré de la présente invention, la poupée mobile est configurée pour entrainer en translation la barre à usiner selon une direction parallèle à l'axe longitudinal de la barre à usiner. Une poupée mobile capable d'entrainer en translation la barre à usiner permet l'usinage d'une pièce sans devoir prévoir d'autre moyen d'entrainement de la barre en translation.

Selon un mode de réalisation préféré suivant de la présente invention, la machine-outil comprend des moyens de communications prévus pour communiquer avec des moyens de communications du peigne. Grâce aux moyens de communications de la machine-outil, il est possible de transférer des informations contenues dans le peigne à la machine-outil. Il est ainsi par exemple possible de prévoir que lors de l'attachement du peigne à la machine-outil les informations contenues dans le peigne, telles que l'identification du peigne, le nombre d'outils sur le peigne, le type d'outils, la position des outils, et même le programme d'usinage soient automatiquement transférées à la machine-outil. La machine-outil reçoit de manière automatique toutes les informations nécessaires à l'usinage de la pièce et l'usinage peut commencer immédiatement.

### Brève description des dessins

Les particularités et les avantages de la présente invention apparaîtront avec plus de détails dans le cadre de la description qui suit avec des exemples de réalisation donnés à titre illustratif et non limitatif en référence aux quatorze dessins ci-annexés qui représentent :

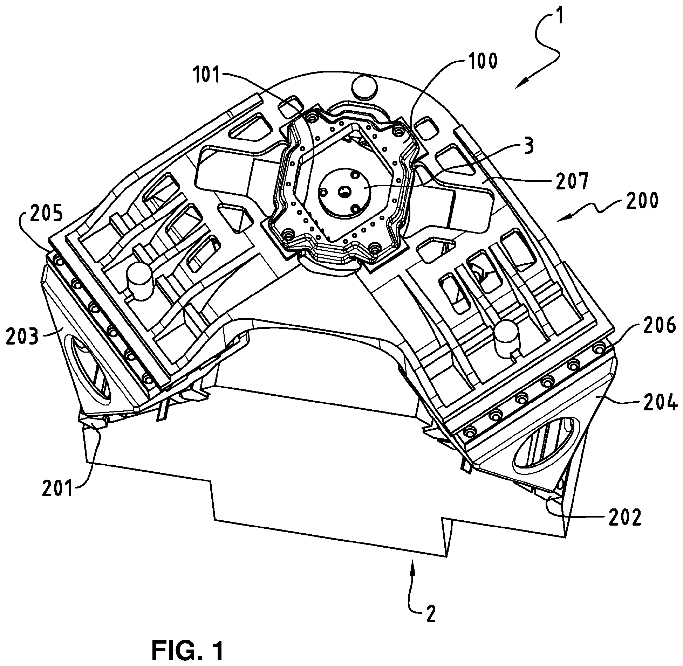

- La figure 1 représente une première vue en perspective d'une machine-outil selon un mode de réalisation préféré du deuxième aspect de la présente invention, d'un dispositif de positionnement selon un mode de réalisation préféré du premier aspect de la présente invention, ainsi qu'un peigne selon un mode de réalisation préféré ;

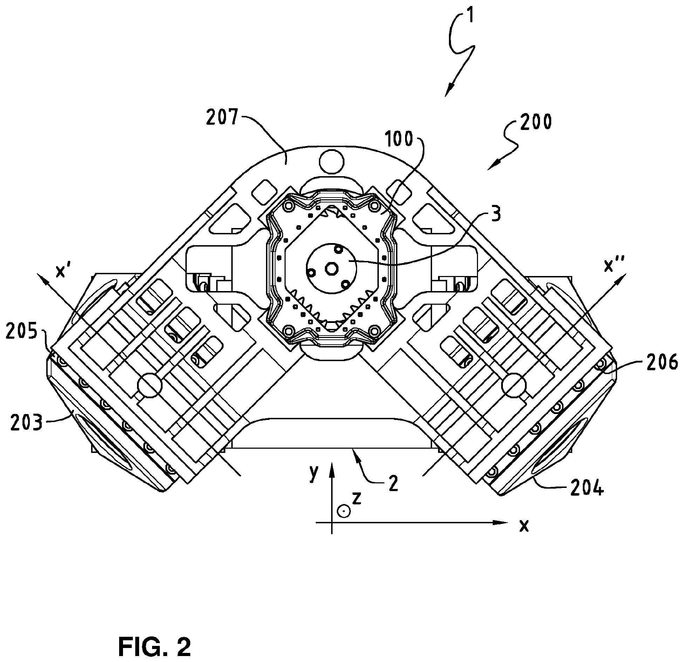

- La figure 2 représente une vue de face d'une machine-outil selon un mode de réalisation préféré du deuxième aspect de la présente invention, d'un dispositif de positionnement selon un mode de réalisation préféré du premier aspect de la présente invention, ainsi qu'un peigne selon un mode de réalisation préféré ;

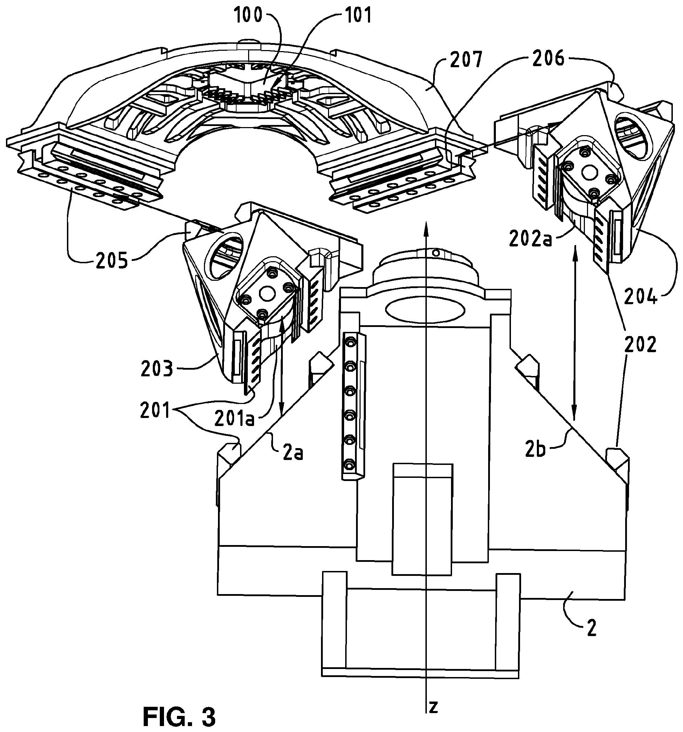

- La figure 3 représente une deuxième vue en perspective et partiellement explosée d'une machine-outil selon un mode de réalisation préféré du deuxième aspect de la présente invention, d'un dispositif de positionnement selon un mode de réalisation préféré du premier aspect de la présente invention, ainsi qu'un peigne selon un mode de réalisation préféré ;

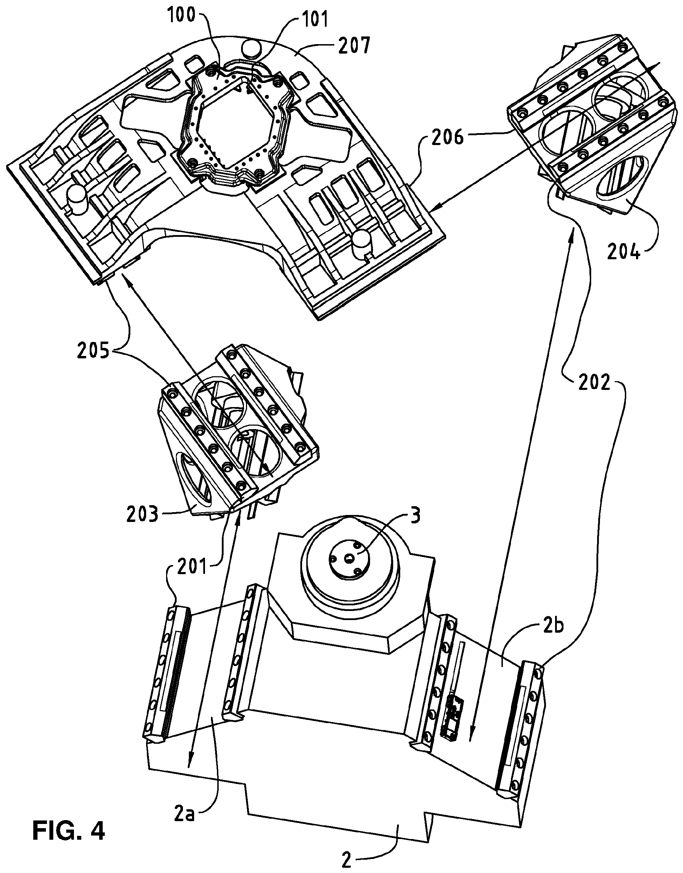

- La figure 4 représente une troisième vue en perspective et partiellement explosée d'une machine-outil selon un mode de réalisation préféré du deuxième aspect de la présente invention, d'un dispositif de positionnement selon un mode de réalisation préféré du premier aspect de la présente invention, ainsi qu'un peigne selon un mode de réalisation préféré ;

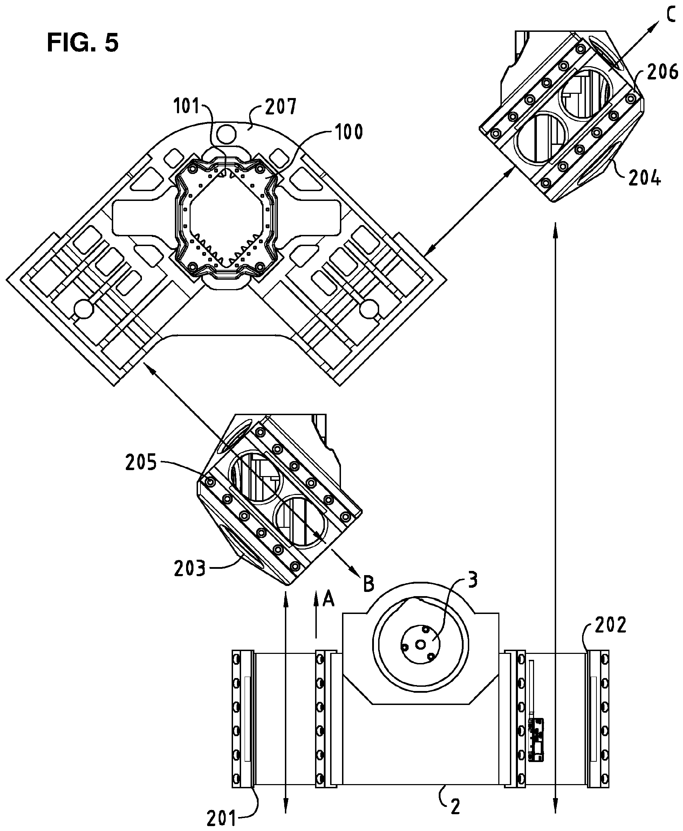

- La figure 5 représente une vue de face et partiellement explosée d'une machine-outil selon un mode de réalisation préféré du deuxième aspect de la présente invention, d'un dispositif de positionnement selon un mode de réalisation préféré du premier aspect de la présente invention, ainsi qu'un peigne selon un mode de réalisation préféré ;

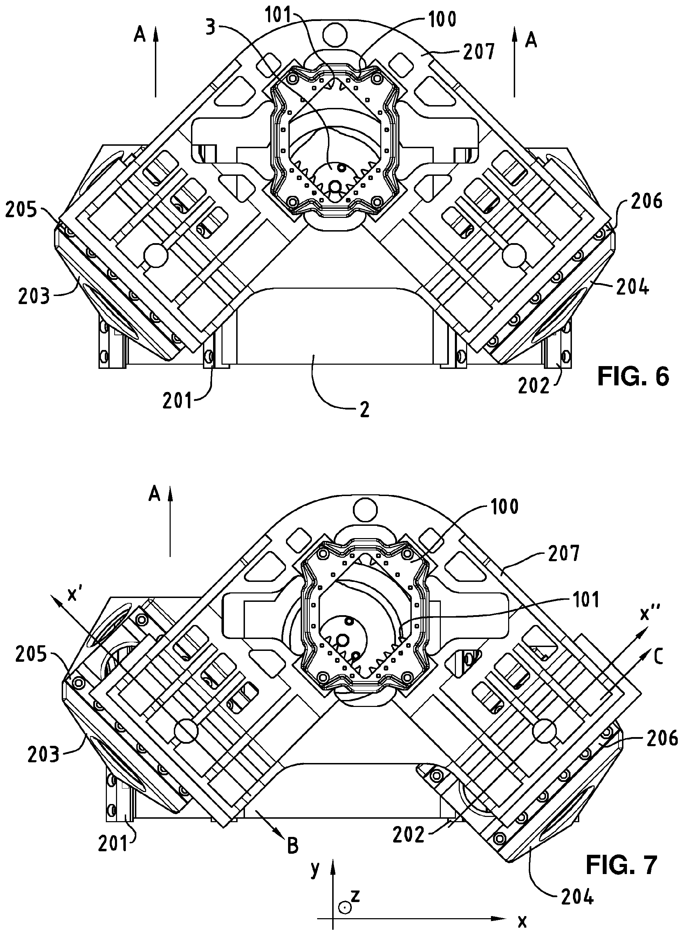

- La figure 6 représente une vue de face d'une machine-outil selon un mode de réalisation préféré du deuxième aspect de la présente invention, d'un dispositif de positionnement selon un mode de réalisation préféré du premier aspect de la présente invention, ainsi qu'un peigne selon un mode de réalisation préféré, dans laquelle le chariot du dispositif de positionnement a été déplacé droitement;
- La figure 7 représente une vue de face d'une machine-outil selon un mode de réalisation préféré du deuxième aspect de la présente invention, d'un dispositif de positionnement selon un mode de réalisation préféré du premier aspect de la présente invention, ainsi qu'un peigne selon un mode de réalisation préféré, dans laquelle le chariot du dispositif de positionnement a été déplacé en diagonale;

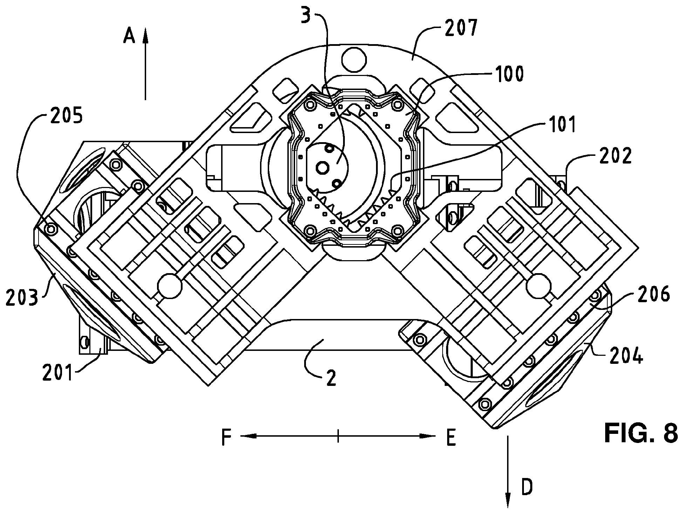

- La figure 8 représente une vue de face d'une machine-outil selon un mode de réalisation préféré du deuxième aspect de la présente invention, d'un dispositif de positionnement selon un mode de réalisation préféré du premier aspect de la présente invention, ainsi qu'un peigne selon un mode de réalisation préféré, dans laquelle le chariot du dispositif de positionnement a été déplacé horizontalement;

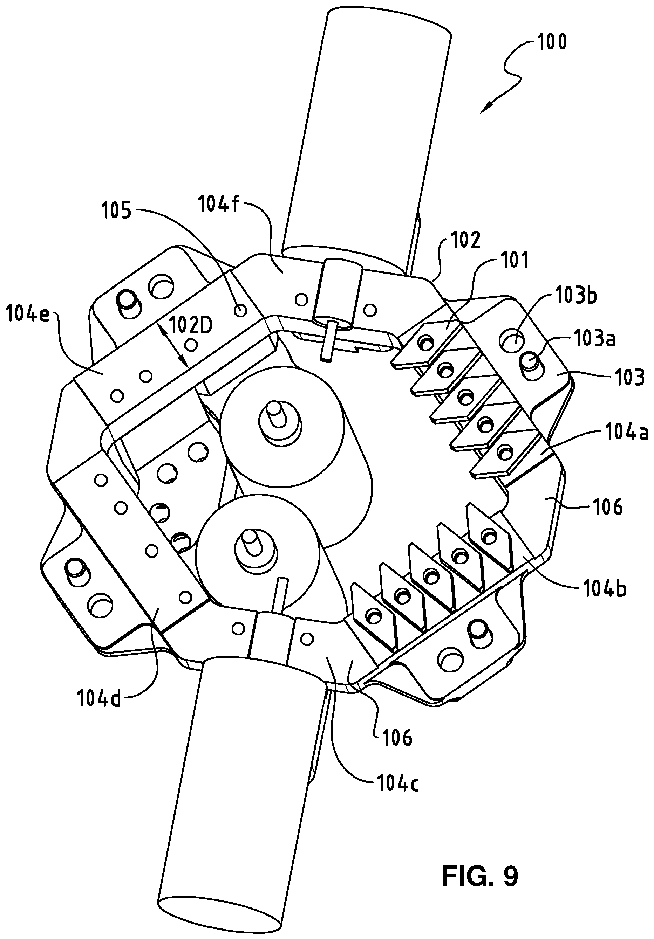

- La figure 9 représente une première vue en perspective d'un peigne selon un deuxième mode de réalisation préféré du premier aspect de la présente invention, sur lequel des outils de coupe et rotatifs sont attachés;

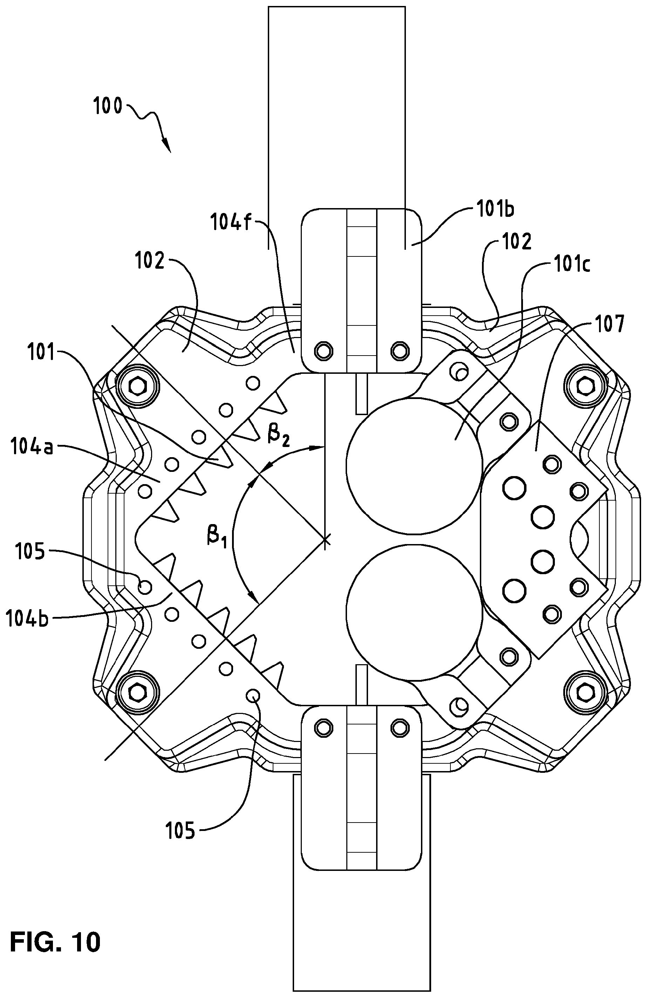

- La figure 10 représente une vue de derrière d'un peigne selon le deuxième mode de réalisation préféré, sur lequel des outils de coupe et rotatifs sont attachés;

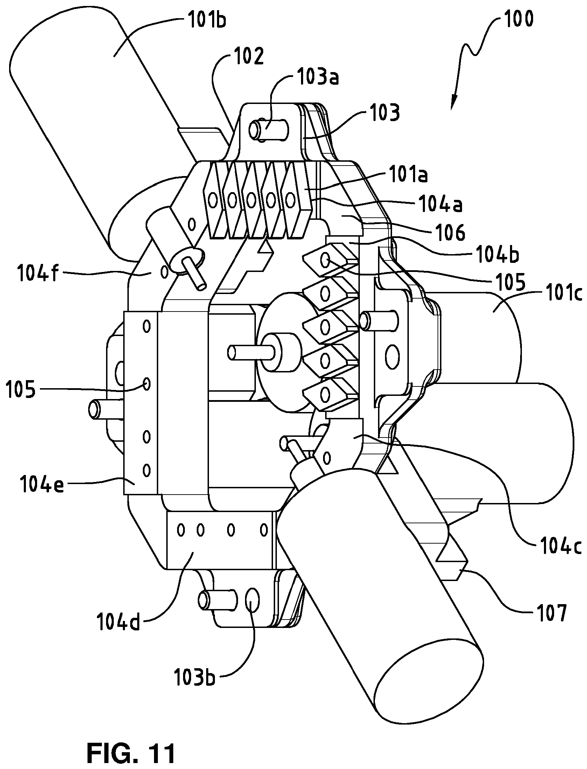

- La figure 11 représente une deuxième vue en perspective d'un peigne selon le deuxième mode de réalisation préféré, sur lequel des outils de coupe et rotatifs sont attachés;

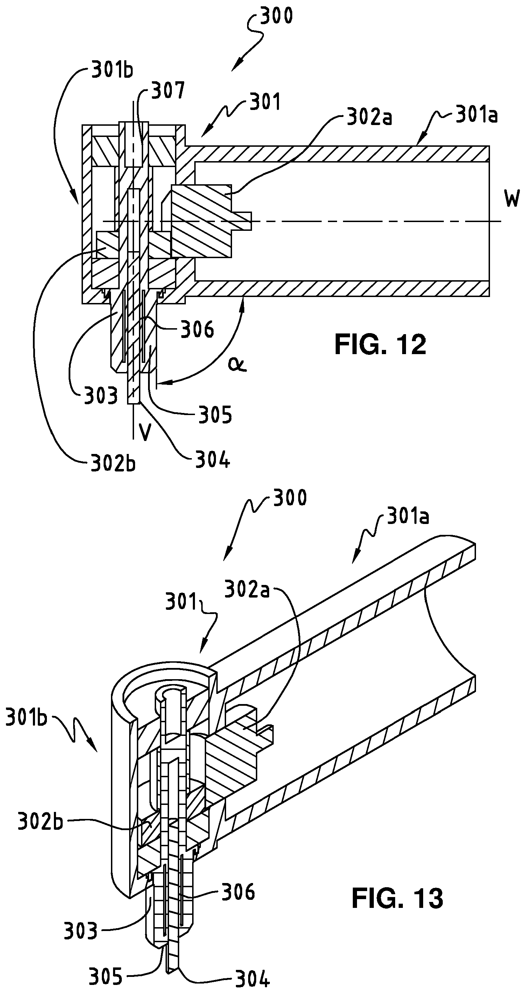

- La figure 12 représente une vue de côté et en coupe d'un dispositif d'entrainement d'outils rotatifs;
- La figure 13 représente une vue en perspective et en coupe d'un dispositif d'entrainement d'outils rotatifs ;et

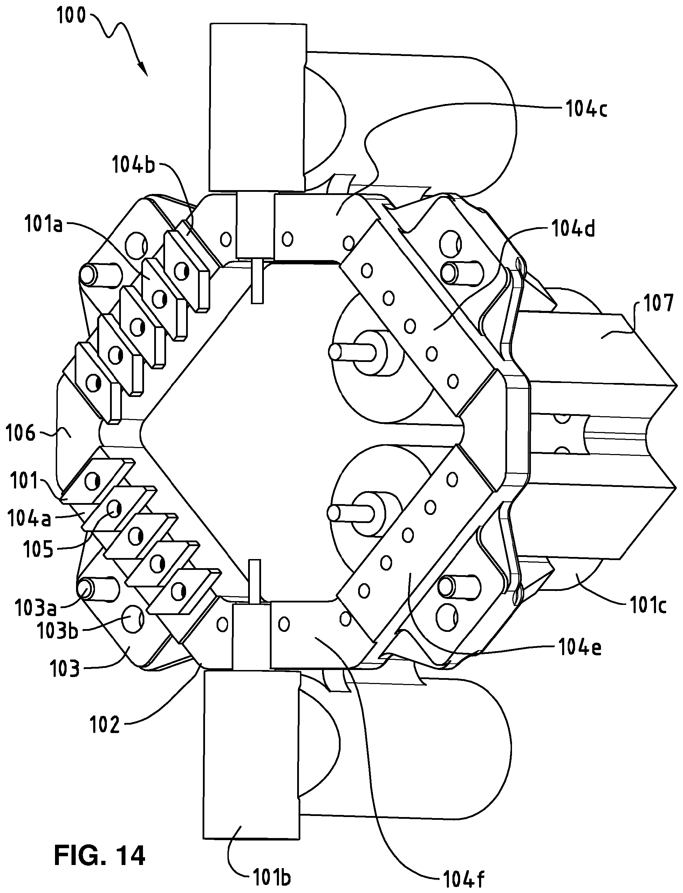

- La figure 14 représente une troisième vue en perspective d'un peigne selon le deuxième mode de réalisation préféré, sur lequel des outils de coupe et rotatifs sont attachés.

### Description détaillée

La figure 1 présente une première vue en perspective d'une machine-outil 1, ici un tour automatique, selon un premier mode de réalisation de cet aspect de la présente invention. Le tour automatique 1 comprend un bâti 2, un canon 3, de préférence fixe dans ce mode réalisation, une poupée mobile (non montrée) qui permet le serrage et l'entraînement en rotation ainsi qu'en translation d'une barre à usiner selon un axe z qui correspond à l'axe longitudinal de cette dernière, et un peigne 100 portant des outils 101 (voir également figure 2) nécessaires à l'usinage. Le peigne 100 est attaché de préférence à un chariot 207 faisant partie d'un dispositif inventif de positionnement 200 qui permet de positionner précisément les outils 101 et un temps minimum par rapport à la barre à usiner.

Dans un premier lieu, les caractéristiques structurelles et fonctionnelles du dispositif inventif de positionnement 200 seront décrites grâce aux figures 2 à 5.

La figure 2 présente une vue de face de la machine-outil 1 comprenant un dispositif de positionnement 200 selon un premier mode de réalisation de cet aspect de la présente invention. Comme on peut le constater, le dispositif 200 comprend le chariot 207 qui est configuré de telle sorte qu'un peigne 100 puisse y être attaché. Dans la position de base du dispositif de positionnement 200, c'est-à-dire la position dans laquelle le chariot 207 est positionné de manière symétrique par rapport à la barre à usiner, le peigne 100 est lui aussi positionné de manière symétrique par rapport au canon 3 de la machine-outil 1 et donc par rapport à la barre à usiner (non montrée ici). Dans cette figure, des axes x, x', x", y et z sont illustrés et seront utilisés, ci-dessous, pour expliquer le principe de fonctionnement du système de positionnement 200. L'axe y est dénommé dans ce qui suit comme axe droit, l'axe x comme axe horizontal, l'axe x' comme premier axe incliné et l'axe x" comme deuxième axe incliné. Comme on peut le voir dans cette figure, les axes inclinés x' et x" forment dans ce mode de réalisation un angle droit.

Les figures 3 à 5 montrent respectivement une vue en perspective de dessous, une vue en perspective de devant et une vue de face, toutes partiellement explosées, de la machine-outil 1 et du dispositif de positionnement 200. Le dispositif de positionnement 200 comprend un premier guidage linéaire droit 201 et un deuxième guidage linéaire droit 202 qui sont, dans ce mode de réalisation, placés symétriquement par rapport à l'axe z sur des plans inclinés 2a et 2b du bâti 2 de la machine-outil 1 (voir figure 3). Il est important de noter que la présence des plans inclinés 2a et 2b n'est pas nécessaire pour le fonctionnement du dispositif de positionnement 200. Les premier et deuxième guidages linéaires droits 201, 202 pourraient être attachés sur des plans du bâti 2 normaux à l'axe z. Néanmoins, la présence des plans inclinés 2a et 2b permet de prévoir des coulisseaux 203 et 204 entre les guidages linéaires droits et les guidages linéaires inclinés. Grâce à cela, les outils 101 peuvent être placés plus près du canon 3 de la machine-outil 1 et, de ce fait, des pièces de très petites dimensions peuvent être usinées sans déports d'outils. De manière avantageuse, les coulisseaux 203 et 204 sont prévus en un matériau très rigide et léger, par exemple de la fonte, de préférence de la fonte EN-GJS-400-15. Ils sont également de préférence évidés afin de limiter leur poids, respectivement leur masse, le plus possible. Comme on peut le voir, le chariot 207 est également de préférence évidé ce qui permet de limiter également son poids, respectivement sa masse.

Comme illustré dans les figures 3 à 5, un premier guidage linéaire incliné 205 et un deuxième guidage linéaire incliné 206 sont attachés respectivement sur le premier et le deuxième coulisseau 203,204. Les coulisseaux 203 et 204 sont conçus de telle façon que les directions de translation x' et x" associées aux premier et deuxième guidages linéaires inclinés 205, 206 forment un plan qui est normal à l'axe z, c'est-à-dire normal à l'axe longitudinal de la barre à usiner. De plus, le chariot 207, qui est relié aux guidages linéaires inclinés 205 et 206, est prévu de telle façon à ce que les outils 101, attachés à celui-ci, de préférence par l'intermédiaire d'un peigne 100, soient déplacés uniquement dans un plan normal à l'axe z.

Le dispositif 200 comprend, en outre, un premier moteur d'entrainement droit et un deuxième moteur d'entrainement droit (non montrés dans les figures) qui agissent, par l'intermédiaire d'un premier accouplement à vis à billes 201a et un deuxième accouplement à vis à billes 202a, respectivement sur le premier coulisseau 203 et le deuxième coulisseau 204 entrainant ainsi ceux-ci parallèlement à l'axe droit y.

Le principe de fonctionnement du dispositif de positionnement 200 va maintenant être expliqué à l'aide des figures 1 et 6 à 8 qui présentent des positions différentes du chariot 207 et donc des outils 101 par rapport au canon 3 et par rapport à la barre à usiner.

Comme mentionnée ci-dessus, la figure 2 représente la position de « base » du chariot 207 par rapport au canon 3, c'est-à-dire la position dans laquelle le chariot 207 est positionné symétriquement par rapport à la barre à usiner. Lorsque les coulisseaux 203 et 204 sont entrainés de manière synchrone, c'est-à-dire à la même vitesse et dans la même direction, selon la direction A, parallèle à l'axe droit y, par l'intermédiaire des premier et deuxième guidages linéaires droits 201, 202, le chariot 207 lui aussi est entrainé en translation parallèlement à l'axe y. Grâce au mouvement synchrone des coulisseaux 203, 204, la position selon l'axe y des outils 101 peut donc être ajustée, comme illustré dans la figure 6.

En revanche, lorsqu'uniquement un des coulisseaux 203, 204 est entrainé en translation parallèlement à l'axe droit y, par exemple le premier coulisseau 203 selon direction A, comme illustré dans la figure 7, par l'intermédiaire du guidage linéaire droit respectif, le chariot 207 n'est pas uniquement déplacé en translation droite parallèlement à l'axe y mais aussi en translation horizontale parallèlement à l'axe x. Le chariot est donc déplacé dans un tel cas en diagonale. En effet, comme le deuxième coulisseau 204 est, par l'intermédiaire du deuxième moteur 202b, solidaire du guidage linéaire droit 202, il ne peut pas se déplacer en translation selon la direction A en réponse au déplacement du premier coulisseau 203. Par contre, en réponse au déplacement du premier coulisseau 203 selon la direction A, le chariot 207 est entrainé par rapport au premier coulisseau 203 parallèlement au premier axe incliné x' dans la direction B et par rapport au deuxième coulisseau 204 parallèlement au deuxième axe incliné x" dans la direction C. A noter que dans ce mode de réalisation, dû au fait que le dispositif de positionnement 200 est configuré de manière symétrique, les déplacements selon les directions B et C sont de même amplitude. Un déplacement du premier coulisseau 203 selon la direction A tandis que le deuxième coulisseau 204 reste immobile se traduit donc finalement en un déplacement du chariot 207 en « diagonale », c'est-à-dire un déplacement ayant une composante selon l'axe horizontal x et une composante selon l'axe droit y.

Une translation du chariot 207 parallèle à l'axe horizontal x est atteinte en déplaçant en translation les premier et deuxième coulisseaux 203 et 204 selon des directions parallèles opposées A et D. Par exemple, en se reportant à la figure 8, un déplacement du chariot 207 uniquement selon la direction E sans que celui-ci ne se déplace selon l'axe y, est atteint par une translation du premier coulisseau 203 selon la direction A accompagnée d'une translation de même amplitude du deuxième coulisseau 204 dans la direction D. De manière analogue un déplacement du chariot 207 dans la direction horizontale F est atteint par une translation du deuxième coulisseau 204 selon dans la direction A et une translation du premier coulisseau 203 dans la direction D.

Comme on peut le comprendre de la description du principe de fonctionnement du dispositif positionnement 200 ci-dessus, il est possible en combinant les directions et amplitudes des déplacements des premier et deuxième coulisseaux 203 et 204 uniquement parallèlement à l'axe droit y, de déplacer le chariot 207, et donc les outils 101, dans n'importe quelle direction dans un plan définit par les axes x et y. Il est donc possible d'amener n'importe quel outil 101 attaché directement au chariot 207 ou au peigne 100 dans la position requise pour l'usinage de la pièce à usiner.

Un des grands avantages du dispositif de positionnement 200, par rapport aux dispositifs connus de l'art antérieur, se situe dans le fait que les guidages linéaires, nécessaires pour le déplacement des outils dans n'importe quelle direction, sont disposés topologiquement en « parallèle » et non en « série ». Dans les dispositifs connus de l'art antérieur, les guidages linéaires et leurs moteurs d'entrainement sont placés en série ce qui implique qu'au moins un des moteurs d'entrainement doit être toujours déplacé en même temps que le chariot 207. De ce fait, la masse du moteur, qui est normalement important par rapport aux masses des autres éléments du dispositif de positionnement, doit être mise en mouvement afin de pouvoir positionner les outils par rapport à la barre à usiner. Ceci implique que les dispositifs de positionnement connus de l'art antérieur possèdent une inertie importante ce qui limite non seulement le temps minimum dans lequel le positionnement peut s'effectuer mais aussi sa précision. En effet, une inertie importante implique que la décélération du chariot mis en mouvement à grande vitesse est plus délicate. En revanche, grâce au dispositif de positionnement selon la présente invention, les moteurs sont fixes et ne doivent jamais déplacés. Ainsi, uniquement le chariot, les coulisseaux et les outils doivent être déplacés ce qui permet de limiter la masse totale à mettre en mouvement lors du positionnement des outils. Ceci permet d'atteindre des temps de positionnement beaucoup plus courts et donc une cadence d'usinage plus grande toute en garantissant une haute précision du positionnement et donc de l'usinage.

Les figures 9 à 11 et 14 présentent un peigne pour machine-outil 100 selon un premier mode de réalisation de cet aspect de la présente invention. Le peigne 100 comporte un support d'outil 102 qui comprend six plaques d'attachements d'outils 104a-f essentiellement rectangulaires reliées entre elles par les coins 106. Le support d'outils 102 du mode de réalisation présenté dans ces figures prend donc la forme d'un cadre carré tronqué. Dans le cadre de la présente invention, le support d'outils 102 pourrait prendre une autre forme essentiellement plane qui entoure au moins partiellement une zone d'usinage dans laquelle une pièce à usiner est usinable. Ainsi, dans le cadre de la présente invention, un nombre différent de plaques d'attachement d'outils peut être prévu. La forme de ces plaques peut être aussi différente que celle illustrée dans les figures 9 à 11 et 14. Les plaques peuvent prendre une forme arquée. Le support d'outils 102, peut alors prendre la forme d'un anneau ou d'une couronne. Le support d'outils 102 pourraient bien entendu prendre également une forme polygonale, tel qu'un triangle, un carré, un rectangle, un pentagone, un hexagone, un heptagone, un octogone, ou tout autre type de polygone régulier ou irrégulier. Il n'est non plus pas nécessaire dans le cadre de la présente invention que le cadre formé par le support d'outils 102 soit fermé. Ce qui est important est uniquement que la forme du support d'outils permette d'entourer au moins partiellement la zone dans laquelle la pièce va être usinée.

Comme on le peut voir dans les figures 9 à 11 et 14, des supports d'attachement 103 sont attachés aux arrêtes extérieures des quatre plaques d'attachement d'outils 104a, 104b, 104d et 104e. Les supports d'attachement 103 comprennent avantageusement des goupilles 103a qui sont prévues pour coopérer avec des trous correspondants prévus dans une machine-outil ou dans un système de positionnement d'outils, par exemple avec le chariot 207 du système de positionnement 200 de la présente invention. De plus, les supports d'attachement 103 comprennent des trous de positionnement 103b qui sont prévus pour coopérer avec des goupilles d'une machine-outil ou d'un dispositif de positionnement d'outil, tel que par exemple le dispositif de positionnement 200 de la présente invention. Il est ainsi possible de positionner et d'attacher le peigne 100 sur une machine-outil en garantissant que le support 102 adopte une position bien définie par rapport à la machine-outil ou/et au chariot de cette dernière.

De plus, des moyens de fixation d'outils 105 sont prévus dans chaque plaque d'attachement d'outils 104a-f. Le peigne 100 comprend, dans le mode de réalisation présenté, au total vingt-quatre moyens de fixation d'outils 105. Il est bien entendu possible, sans sortir du cadre de la présente invention, de prévoir un nombre différent, plus grand ou plus petit, de moyens de fixation d'outils 105. Ces moyens d'attachement d'outils 105 sont configurés de telle façon que les outils 101, ici sous forme de plaquettes 101a, puissent être directement attachés aux plaques d'attachement d'outils 104a-f du peigne 100. A l'inverse des peignes connus de l'art antérieur, aucun porte-plaquette ni aucun porte-outil n'est ici nécessaire. Il est toutefois important de noter, que des entretoises peuvent être prévues entre les plaquettes 101a et les plaques d'attachement d'outil 104a-f afin d'ajuster la distance entre les plaquettes 101a et les plaque d'attachement, sans sortir du cadre de la présente invention. Grâce au fait que les plaquettes 101a soient directement attachées au support d'outils 102, il est possible de prévoir un support d'outil 102 qui possède une largeur 102D de cadre 102 petite (voir figure 9) ce qui permet de limiter la masse et les dimensions du peigne 100. De plus, le fait que les plaquettes 101a soient directement attachées au support d'outil 102 permet de réduire la dimension des trajets que le peigne 100 doit effectuer lors de l'usinage de la pièce et permet donc un usinage plus rapide.

Comme on peut le constater grâce aux figures 9 à 11 et 14, le support d'outil 102 est conçu de telle façon qu'il comprenne des plaques d'attachement d'outils 104a-104b, orientés selon au moins deux directions différentes et formant entre elles un angle β. Dans le mode de réalisation présenté dans ces figures, un angle β1 de 90° est par exemple prévu entre les outils 101 placés sur les plaques d'attachement d'outils 104a et 104b. Un angle β2 de 45° est quant à lui présent entre les plaques d'attachement d'outils 104a et 104f (voir figure 10). La possibilité d'avoir des outils 101 placés sur des plaques d'attachement orientées selon au moins deux directions différentes permet de prévoir un très grand nombre d'outils sur un seul peigne tout en diminuant les distances en translation que le peigne doit effectuer lors de l'usinage de la pièce. Cela permet également d'augmenter la cadence d'usinage. Comme mentionné ci-dessus la géométrie du peigne 100 du mode de réalisation présenté dans ces figures ne doit en aucun cas être considérée comme limitative. L'effet technique recherché est atteint par un peigne ayant un support d'outil dont la forme permet au moins partiellement d'entourer la zone d'usinage. Il est par exemple possible de prévoir le peigne 100 sous forme d'anneau ouvert ou fermé sans sortir du cadre de la présente invention.

Le support d'outils 102 est conçu, dans le mode de réalisation présenté dans les figures 9 à 11 et 14 de telle sorte que les plaques d'attachement 104a-f forment un cadre fermé. Cela a l'avantage d'apporter une grande rigidité mécanique du peigne 100. Grâce à la rigidité du support d'outils 102, les positions relatives des outils 101 montés sur le peigne 100 restent constantes les unes par rapport aux autres. Bien entendu, il est possible de prévoir le support d'outils 102 selon diverse géométries sans sortir du cadre de la présente invention. Comme mentionné plus haut, un peigne selon la présente invention, pourrait ne comprendre que deux plaques d'attachement d'outils 104a-b orientées l'une par rapport à l'autre pour former un angle obtus plus petit que 180°.

Comme on peut le voir dans les figures 9 à 11 et 14, le peigne 100 ne comprend pas uniquement des outils 101 sous forme de plaquettes 101a, par exemple des burins, mais aussi des outils rotatifs 101b et 101c pour l'usinage par exemple de trous ou de filetages. Le peigne 100 peut comprendre des premiers outils rotatifs 101b dont l'axe de rotation de l'outil est parallèle au plan définit par le support d'outil 102. De manière avantageuse, les axes de rotations des premiers outils rotatifs se situent dans le même plan que les plaquettes 101a. Ces premiers outils rotatifs 101b peuvent aussi prendre la forme d'une broche coudée comme illustré dans la figure 14. Une telle broche coudée peut par exemple prendre la forme d'un dispositif inventif d'entrainement pour outil rotatif 300. Le peigne comprend également des deuxièmes outils rotatifs 101c dont les axes de rotation sont hors du plan définit par les plaquettes 101a. Avantageusement, les axes de rotation des deuxièmes outils rotatifs 101c sont prévus perpendiculaires au plan définit par les plaquettes 101a. Les deuxièmes outils rotatifs 101c peuvent être soit directement attachés au support d'outil 102 ou par l'intermédiaire d'un support d'outils rotatifs 107 qui lui est attaché au support d'outil 102. Le fait de prévoir un support d'outils rotatifs 107 séparé permet de prévoir un plus grand nombre total d'outils sur le peigne 100 et/ou de pouvoir échanger les outils rotatifs 101b ou 101c tout en laissant les positions des outils 101a sur le support d'outil 102 inchangées. Le peigne 100 est prévu pour comporter tous les outils nécessaires à l'usinage d'une pièce. Il est donc possible d'envisager d'avoir un peigne par pièce à usiner. Cela permet une cadence d'usinage plus rapide car il est possible de passer d'une pièce à une autre plus rapidement.

Comme mentionné ci-dessus, le peigne 100 comprend avantageusement les goupilles 103a et les trous de positionnement 103b ce qui permet de fixer et détacher à de nombreuses reprises le peigne 100 à une machine-outil spécifique tout en assurant que les outils 101 se retrouvent à chaque fois dans la même position. Bien entendu le fait que le peigne 100 soit prévu détachable permet également que le même peigne 100 soit utilisé sur plusieurs machines-outils.

Comme évoqué ci-dessus le peigne 100 est conçu de telle façon que les positions relatives des outils 101 ne changent pas même lorsque le peigne est détaché et ré-attaché à une ou plusieurs machines-outils. Ceci est très avantageux car lors de la réutilisation du peigne 100 les positions relatives des outils ne doivent pas à nouveau être déterminées et l'usinage de la pièce peut commencer immédiatement sans nouveau calibrage qui voudrait impliquer une perte de temps importante. En effet, dans le domaine de l'usinage des pièces mécaniques de haute précision, le calibrage est un processus qui demande normalement beaucoup de soins et de temps. Néanmoins, afin que les outils 101 montés sur le peigne 100 puissent être utilisés de façon à créer une pièce à usiner de grande précision, il est important de déterminer une fois, lors d'un calibrage, les positions absolues des outils 101 sur le peigne 100, avantageusement par rapport à un marquage de référence sur le peigne 100. Le marquage de référence peut être par exemple une marque optique sur le peigne, par exemple une croix ou une forme équivalente. Bien entendu, la détermination des positions absolues des outils sur le peigne peut se faire également par rapport à un élément de référence du peigne, tel que par exemple une des goupilles 103a. Lors du calibrage, il est aussi important de déterminer les directions d'usinage, par exemple la direction de coupe, de chaque outil 101 monté sur le peigne 100.

Il est important de noter que la détermination des positions absolues des outils 101 sur le peigne 100 peut être soit effectuée de manière indépendante d'une machine-outil par l'intermédiaire d'une machine de calibrage dédiée à cet effet, par exemple une machine de calibrage optique, ou soit directement sur une machine-outil en usinant des pièces de calibrage avec le peigne 100 suivit par l'analyse du résultat de l'usinage de ces pièces de calibrage.

Afin de faciliter la réutilisation d'un peigne 100, il est avantageux de prévoir que ce peigne soit muni d'un moyen d'identification unique qui permet son identification. Ce moyen d'identification peut être un numéro ou un code gravé ou placé d'une autre façon sur une partie du peigne par exemple sur le support d'outil 102. Ce numéro peut alors être introduit manuellement par la personne qui manie la machine-outil sur laquelle le peigne 100 est monté pour indiquer à la machine-outil quel peigne 100 y est attaché. Avantageusement, la machine-outil contient une base de données permettant d'identifier les peignes. Cette base de données peut par exemple contenir les positions absolues et/ou relatives des outils 101 pour chaque peigne connu. En effet, il est possible de prévoir que toutes les positions absolues des outils sur le peigne soient connues et enregistrées dans la base de données. Il est aussi possible que la position absolue d'un seul outil ou d'un seul point de référence, par exemple le marquage optique mentionné ci-dessus, soit connue et enregistrée dans la base de données ainsi que les positions relatives des outils par rapport à cet élément de références.

Le peigne 100 contient avantageusement des moyens de stockage d'informations (non montré dans les figures) par l'intermédiaire desquels il est possible de stocker et mémoriser les positions absolues et/ou relatives des outils 101 sur le peigne 100 ainsi que l'identification unique de ce peigne. Le peigne 100 peut alors comprendre des moyens électroniques de communication afin de transmettre ces informations et toutes autres informations à la machine-outil lorsque le peigne est attaché à celle-ci. Ces moyens électroniques de communication peuvent être filaires, par exemple sous la forme de connecteurs adaptés prévus sur le peigne et sur la machine-outil, par exemple sous la forme de connecteurs électroniques, ou être sans fils, par exemple sous la forme de puce RFID ou d'autres moyens équivalents connus d'un homme du métier. A noter que les moyens de stockage d'informations peuvent être avantageusement prévus pour contenir des informations, en plus des positions des outils et les directions d'usinage de ces derniers, telles que le nombre de pièces usiner par ce peigne, les dates des utilisations de ce peigne, les dates d'un changement d'outil, les dates des calibrages, la liste des machines-outils sur lesquels le peigne a été utilisé, et/ou la pièce à usiner correspondante au peigne. Cette liste n'étant bien entendu pas exhaustive. Les moyens de stockage peuvent par exemple être avantageusement prévus pour aussi contenir des fichiers CAD décrivant la pièce à usiner correspondante. De plus, les moyens électroniques de communication du peigne 100, qu'ils soient filaires ou sans fils, sont avantageusement prévus de façon à pouvoir permettre la communication uni-ou bidirectionnelle entre le peigne 100 et des moyens de lecture des informations contenues dans les moyens de stockage. Ces moyens de lectures peuvent être par exemple prévus dans une machine de calibrage dédiée au calibrage des peignes ou dans toutes autre dispositifs tels que par exemple des moyens de communications mobiles, tels par exemple des smartphones. Cela permet de lire rapidement les informations contenues dans les moyens de stockage, et par exemple d'identifier un peigne spécifique ainsi que la pièce correspondante. Grâce aux moyens de stockage de communication prévus dans le peigne, il est possible de prévoir que, lorsque le peigne est attaché à une machine-outil possédant des moyens de communications équivalents, les informations stockées dans le peigne soient automatiquement transférées à la machine-outil. Par exemple, on peut envisager que le fichier CAD décrivant la pièce à usiner ainsi que le programme d'usinage correspondant, tous deux stockés dans les moyens de stockage du peigne, soient transférés à la machine-outil. Cette dernière est alors prête à commencer l'usinage sans qu'un opérateur doivent entrer ces informations.

Comme mentionné plus haut une fois que le calibrage a été effectué, c'est-à-dire une fois que les positions des outils 101 ont été déterminées par rapport à un point de référence, le peigne 100 peut être utilisé sur plusieurs machines-outils sans avoir besoin d'effectuer un nouveau calibrage. De plus, il est important de souligner que le peigne 100 a un autre avantage en relation avec le calibrage. En effet, lorsqu'un outil 101 du peigne 100 doit être échangé, par exemple après une rupture, il est uniquement nécessaire de déterminé la position de l'outil de remplacement par rapport au point de référence pour connaître toutes les positions relatives.

Les figurent 12 et 13 présentent des vues en coupe d'un dispositif d'entrainement pour outil rotatif 300 selon un mode de réalisation préféré de cet aspect de la présente invention. Le dispositif 300 comporte un châssis 301 subdivisé en en premier sous-châssis 301a et un deuxième sous-châssis 301b, tous deux de forme essentiellement cylindrique. Comme on peut le voir dans ces figures, le deuxième sous-châssis 301b est placé à une extrémité du premier sous-châssis 301 et forme avec ce dernier un angle obtus α, plus petit que 180°. Dans ce mode de réalisation spécifique l'angle obtus α est égal à 90°. Dans le cadre de la présente invention, il serait bien entendu possible de prévoir un angle α différent de 90°.

Le dispositif 300 comprend également un engrenage magnétique comprenant une roue d'entrée 302a placée dans le premier sous-châssis 301a et une roue de sortie 302b placée dans le deuxième sous-châssis 301b. La roue d'entrée 302a est configurée de telle façon qu'elle peut être entrainée en rotation autour de l'axe longitudinal w du premier sous-châssis 301a à grande vitesse, par exemple par un moteur électrique (non montré ici). Un homme du métier pourrait sans autre imaginer comment un moteur électrique pourrait être prévu dans le premier sous-châssis 301a afin d'entrainer en rotation la roue d'entrée 302a de l'engrenage magnétique 302.

Les roues d'entrée et de sorties 302a, 302b sont couplées magnétiquement. En d'autres termes, les roues d'entrée et de sortie 302a, 302b comprennent des éléments magnétiques créant un couplage magnétique entre les roues. Grâce au couplage magnétique entre la roue d'entrée 302a et la roue de sortie 302b, il est possible d'entrainer en rotation la roue de sortie 302b autour de l'axe longitudinal v du deuxième sous-châssis 301b par l'intermédiaire de la roue d'entrée 302a.

Le dispositif 300 comporte également un moyen de serrage 303 qui est prévu pour serrer et libérer un outil 304, par exemple un perceur. Le moyen de serrage 303 est relié à la route de sortie 302b de telle façon que le moyen de serrage 303, et donc l'outil 304, puissent être entrainés en rotation autour de l'axe longitudinal v du deuxième sous-châssis 301b par l'intermédiaire de l'engrenage magnétique 302.

Le moyen de serrage 303 comporte avantageusement des mâchoires de serrages 305 qui peuvent être déplacées en translation perpendiculairement à l'axe v. De manière avantageuse, les mâchoires de serrage 305 peuvent être entrainées en translation grâce à des membranes flexibles (non montrées ici) couplées à un système hydraulique. De manière avantageuse les membranes flexibles 306 sont déformables en réponse à un changement de pression d'un fluide hydraulique du système hydraulique. En ajustant la pression du fluide, les membranes flexibles sont plus ou moins déformées, ce qui permet d'ajuster les positions des mâchoires de serrage 305 et ainsi d'ajuster la force de serrage des mâchoires 305 sûr l'outil 304 et/ou de libérer ce dernier. La pression du fluide hydraulique peut être ajustée, dans ce mode de réalisation, de manière avantageuse par l'intermédiaire d'une vis d'ajustage (non montrée ici) vissée dans le filetage 307 qui est prévu de manière coaxiale à l'outil 304 mais à l'extrémité opposée du deuxième sous-châssis 302b.

Le dispositif d'entrainement d'outil rotatif 300 selon la présente invention est avantageux par rapport aux dispositifs connus de l'art antérieur car il permet que le moteur d'entrainement du dispositif ne soit pas coaxial à l'outil 304 entrainé en rotation. Ceci permet l'usinage de pièces complexe comprenant par exemple des filetages parallèles à l'axe de la barre à usiner par une machine-outil ne comprenant qu'un dispositif de positionnement permettant le déplacement des outils rotatifs mais aussi les outils de coupe, tel que par exemple le dispositif de positionnement 200 de la présente invention. De plus, un dispositif d'entrainement d'outil rotatif 300 peut être avantageusement combiné avec un peigne 100 de la présente invention. Le dispositif 300 permet de minimiser les déplacements que le peigne doit effectuer lors de l'usinage d'une pièce complexe. De ce fait, la cadence d'usinage peut être augmentée.

## Revendications

1. Système pour machines-outils de positionnement (200) d'outils par rapport à la zone d'usinage comprenant un premier guidage linéaire droit (201) et un deuxième guidage linéaire droit (202), les directions de translation associées au premier guidage linéaire droit (201) et au deuxième guidage linéaire droit (202) étant parallèles, et un chariot (207) conçu pour recevoir des outils (101), le système de positionnement (200) comprenant un premier guidage linéaire incliné (205) attaché au premier guidage linéaire droit (201), la direction de translation associée au premier guidage linéaire incliné (205) formant avec la direction de translation associée avec le premier guidage linéaire droit (201) un angle plus grand que 0° et un deuxième guidage linéaire incliné (206) attaché au deuxième guidage linéaire droit (202), la direction de translation associée au deuxième guidage linéaire incliné (206) formant avec la direction de translation associée avec le deuxième guidage linéaire droit (201) un angle plus grand que 0°, les directions de translation associées au premier guidage linéaire incliné (205) et au deuxième guidage linéaire incliné (206) formant un plan qui est parallèle à la direction de translation associée au premier guidage linéaire droit (201) et au deuxième guidage linéaire droit (202), le système de positionnement (200) comprenant un premier moyen d'entrainement prévu pour entrainer en translation le premier guidage linéaire incliné (205) en agissant sur le premier guidage linéaire droit (201) et un deuxième moyen d'entrainement prévu pour entrainer en translation le deuxième guidage linéaire incliné (206) en agissant sur le deuxième guidage linéaire droit (202), le chariot (207) étant attaché au premier guidage linéaire incliné (205) et au deuxième guidage linéaire incliné (206),
**caractérisé en ce que** le plan de translation du premier guidage linéaire droit (201) et le plan de translation du deuxième guidage linéaire droit (202) sont sécants.

2. Système de positionnement (200) selon la revendication 1, dans lequel l'angle formé par la direction de translation associée au premier guidage linéaire droit (201) et le premier guidage linéaire incliné (205) est plus grand que 20°, avantageusement plus grand que 30°, préférablement plus grand que ou égal à 45° et/ou dans lequel l'angle formé par la direction de translation associée au deuxième guidage linéaire droit (202) et le deuxième guidage linéaire incliné (206) est plus grand que 20°, avantageusement plus grand que 30°, préférablement plus grand que ou égal à 45°.

3. Système de positionnement (200) selon l'une des revendications 1 ou 2, dans lequel l'angle entre la direction de translation associée au premier guidage linéaire incliné (205) et la direction de translation associée au deuxième guidage linéaire incliné (206) est entre 60° et 120°, de préférence entre 70° et 110°, avantageusement de 90°.

4. Système de positionnement (200) selon l'une des revendications 1 à 3, comprenant un premier coulisseau (203) entre le premier guidage linéaire droit (201) et le premier guidage linéaire incliné (205) et un deuxième coulisseau (204) entre le deuxième guidage linéaire droit (202) et le deuxième guidage linéaire incliné (206).

5. Système de positionnement (200) selon l'une des revendications 1 à 4, dans lequel la droite sécante du plan de translation du premier guidage linéaire droit (201) et du plan de translation du deuxième guidage linéaire droit (202) intersecte la zone d'usinage de la machine-outil.

6. Système de positionnement (200) selon l'une des revendications 1 à 5, comprenant des capteurs, pour mesurer la vitesse, l'accélération et/ou la position du premier guidage linéaire droit (201), du deuxième guidage linéaire droit (202), du premier guidage linéaire incliné (203), du deuxième guidage linéaire incliné (204) et/ou du chariot (207).

7. Système de positionnement (200) selon la revendication 6, dans lequel les capteurs sont des capteurs de type règle de mesure à balayage photoélectrique, interférométrique, vélocimétrique, accélérométrique et/ou inclinométrique.

8. Système de positionnement (200) selon l'une des revendications 1 à 7, dans lequel le chariot (207) est au moins partiellement composé d'un matériau possédant un ratio module Young sur masse volumique plus grand que 0.010, avantageusement plus grand que 0.015, de préférence plus que 0.020 lorsque le module de Young est exprimé en GPa et la masse volumique en kg/m³ et/ou possédant un facteur d'amortissement plus grand que 0.0010, avantageusement plus grand que 0.0015, de préférence plus grand que 0.0020.

9. Machine-outil (1) comprenant un système de positionnement d'outils (200) selon l'une des revendications 1 à 8.

10. Machine-outil (1) selon la revendication 9, comprenant une poupée mobile pour l'entrainement en rotation d'une barre à usiner selon l'axe longitudinal de la barre à usiner.

11. Machine-outil (1) selon une des revendications 9 ou 10, dans laquelle la poupée mobile est configurée pour entrainer en translation la barre à usiner selon une direction parallèle à l'axe longitudinal de la barre à usiner.

12. Machine-outil (1), selon une des revendications 9 à 11, comprenant des moyens de communications prévus pour communiquer avec des moyens de communications du peigne.

## Patentansprüche

1. System für Werkzeugmaschinen zum Positionieren (200) von Werkzeugen in Bezug auf den Bearbeitungsbereich, umfassend eine erste gerade Linearführung (201) und eine zweite gerade Linearführung (202), wobei die Translationsrichtungen der ersten geraden Linearführung (201) und der zweiten geraden Linearführung (202) parallel sind, und einen Schlitten (207), der zur Aufnahme von Werkzeugen (101) ausgelegt ist, wobei das Positionierungssystem (200) eine erste, an der ersten geraden Linearführung (201) befestigten, geneigte Linearführung (205) umfasst, wobei die Translationsrichtung, die der ersten geneigten Linearführung (205) zugeordnet ist, mit der der ersten geraden Linearführung (201) zugeordneten Translationsrichtung einen Winkel von mehr als 0° bildet, und eine zweite, an der zweiten geraden Linearführung (202) befestigten, geneigte Linearführung (206) umfasst, wobei die der zweiten geneigten Linearführung (206) zugeordnete Translationsrichtung mit der der zweiten geraden Linearführung (201) zugeordneten Translationsrichtung einen Winkel von mehr als 0° bildet, wobei die mit der ersten geneigten Linearführung (205) und der zweiten geneigten Linearführung (206) verbundenen Translationsrichtungen eine Ebene bilden, die parallel zu der mit der ersten geraden Linearführung (201) und der zweiten geraden Linearführung (202) verbundenen Translationsrichtung ist, wobei das Positionierungssystem (200) ein erstes Antriebsmittel umfasst, das dazu vorgesehen ist, durch Einwirken auf die erste gerade Linearführung (201), die erste geneigte Linearführung (205) translatorisch anzutreiben, und ein zweites Antriebsmittel, das dazu vorgesehen ist, durch Einwirken auf die zweite gerade Linearführung (202), die zweite geneigte Linearführung (206) translatorisch anzutreiben, wobei der Schlitten (207) an der ersten geneigten Linearführung (205) und an der zweiten geneigten Linearführung (206) befestigt ist,
**dadurch gekennzeichnet, dass** die Translationsebene der ersten geraden Linearführung (201) und die Translationsebene der zweiten geraden Linearführung (202) sich schneiden.

2. Positionierungssystem (200) nach Anspruch 1, wobei der Winkel der durch die, der ersten geraden Linearführung (201) zugeordneten Translationsrichtung und der ersten geneigten Linearführung (205) geformt wird, grösser als 20°, vorteilhafterweise grösser als 30°, vorzugsweise grösser als oder gleich 45° ist und/oder wobei der Winkel, der durch die, der zweiten geraden Linearführung (202) zugeordneten Translationsrichtung und der zweiten geneigten Linearführung (206) geformt wird, grösser als 20°, vorteilhafterweise grösser als 30°, vorzugsweise grösser als oder gleich 45° ist.

3. Positionierungssystem (200) nach einem der Ansprüche 1 oder 2, wobei der Winkel zwischen der Translationsrichtung, die der ersten geneigten Linearführung (205) zugeordnet ist, und der Translationsrichtung, die der zweiten geneigten Linearführung (206) zugeordnet ist, zwischen 60° und 120°, vorzugsweise zwischen 70° und 110°, vorteilhafterweise 90° beträgt.

4. Positionierungssystem (200) nach einem der Ansprüche 1 bis 3, umfassend einen ersten Schieber (203) zwischen der ersten geraden Linearführung (201) und der ersten geneigten Linearführung (205) und einen zweiten Schieber (204) zwischen der zweiten geraden Linearführung (202) und der zweiten geneigten Linearführung (206).

5. Positioniersystem (200) nach einem der Ansprüche 1 bis 4, wobei die Schnittgerade der Translationsebene der ersten geraden Linearführung (201) und der Translationsebene der zweiten geraden Linearführung (202) den Bearbeitungsbereich der Werkzeugmaschine schneidet.

6. Positionierungssystem (200) nach einem der Ansprüche 1 bis 5, aufweisend Sensoren zum Messen der Geschwindigkeit, der Beschleunigung und/oder der Position der ersten geraden Linearführung (201), der zweiten geraden Linearführung (202), der ersten geneigten Linearführung (203), der zweiten geneigten Linearführung (204) und/oder des Schlittens (207).

7. Positionierungssystem (200) nach Anspruch 6, wobei die Sensoren Sensoren vom Typ photoelektrischer, interferometrischer, geschwindigkeitsmessender, beschleunigungsmessender und/oder neigungsmessender Abtastmesssensoren sind.

8. Positionierungssystem (200) nach einem der Ansprüche 1 bis 7, wobei der Schlitten (207) zumindest teilweise aus einem Material mit einem grösseren Verhältnis von Young-Modul zu Dichte als 0,010, vorteilhafterweise grösser als 0,015, vorzugsweise grösser als 0,020, wenn das Young-Modul in GPa und die Dichte in kg/m³ ausgedrückt wird und/oder mit einem Dämpfungsfaktor grösser als 0,0010, vorteilhafterweise grösser als 0,0015, vorzugsweise grösser als 0,0020.

9. Werkzeugmaschine (1) mit einem System zur Positionierung von Werkzeugen (200) gemäss einem der Ansprüche 1 bis 8.

10. Werkzeugmaschine (1) nach Anspruch 9, mit einem beweglichen Spindelstock zum Drehantrieb einer zu bearbeitenden Stange entlang der Längsachse der zu bearbeitenden Stange.

11. Werkzeugmaschine (1) nach einem der Ansprüche 9 oder 10, wobei der bewegliche Spindelstock so konfiguriert ist, dass er die zu bearbeitende Stange in einer Richtung parallel zur Längsachse der zu bearbeitenden Stange translatorisch bewegt.

12. Werkzeugmaschine (1) nach einem der Ansprüche 9 bis 11, mit Kommunikationsmitteln, die für die Kommunikation mit Kommunikationsmitteln des Kamms vorgesehen sind.

## Claims

1. A system for machine tools for positioning tools (200) with respect to the machining zone, comprising a first straight linear guide (201) and a second straight linear guide (202), the translation directions associated with the first straight linear guide (201) and with the second straight linear guide (202) being parallel, and a carriage (207) designed to receive tools (101), the positioning system (200) comprising a first inclined linear guide (205) attached to the first straight linear guide (201), the translation direction associated with the first inclined linear guide (205) forming with the translation direction associated with the first straight linear guide (201) an angle greater than 0° and a second inclined linear guide (206) attached to the second straight linear guide (202), the translation direction associated with the second inclined linear guide (206) forming with the translation direction associated with the second straight linear guide (201) an angle greater than 0°, the translation directions associated with the first inclined linear guide (205) and with the second inclined linear guide (206) forming a plane which is parallel to the translation direction associated with the first straight linear guide (201) and with the second straight linear guide (202), the positioning system (200) comprising a first drive means provided to drive in translation the first inclined linear guide (205) by acting on the first straight linear guide (201) and a second drive means provided to drive the second inclined linear guide (206) in translation by acting on the second straight linear guide (202), the carriage (207) being attached to the first inclined linear guide (205) and to the second inclined linear guide (206),
**characterised in that** the translation plane of the first straight linear guide (201) and the translation plane of the second straight linear guide (202) are secant.

2. The positioning system (200) according to Claim 1, wherein the angle formed by the translation direction associated with the first straight linear guide (201) and the first inclined linear guide (205) is greater than 20°, advantageously greater than 30°, preferably greater than or equal to 45° and/or wherein the angle formed by the translation direction associated with the second straight linear guide (202) and the second inclined linear guide (206) is greater than 20°, advantageously greater than 30°, preferably greater than or equal to 45°.

3. The positioning system (200) according to any one of Claims 1 or 2, wherein the angle between the translation direction associated with the first inclined linear guide (205) and the translation direction associated with the second inclined linear guide (206) is between 60° and 120°, preferably between 70° and 110°, advantageously 90°.

4. The positioning system (200) according to any one of Claims 1 to 3, comprising a first slide (203) between the first straight linear guide (201) and the first inclined linear guide (205) and a second slide (204) between the second straight linear guide (202) and the second inclined linear guide (206).

5. The positioning system (200) according to any one of Claims 1 to 4,
wherein the secant line of the translation plane of the first straight linear guide (201) and of the translation plane of the second straight linear guide (202) intersects the machining zone of the machine tool.

6. The positioning system (200) according to any one of Claims 1 to 5, comprising sensors for measuring the speed, the acceleration and/or the position of the first straight linear guide (201), of the second straight linear guide (202), of the first inclined linear guide (203), of the second inclined linear guide (204) and/or of the carriage (207).

7. The positioning system (200) according to Claim 6, wherein the sensors are sensors of the measuring ruler type with photoelectric, interferometric, velocimetric, accelerometric and/or inclinometric scanning.

8. The positioning system (200) according to any one of Claims 1 to 7,
wherein the carriage (207) is at least partially composed of a material having a ratio of Young's modulus to density greater than 0.010, advantageously greater than 0.015, preferably more than 0.020 when the Young modulus is expressed in GPa and the density is expressed in kg/m3, and/or having a damping factor greater than 0.0010, advantageously greater than 0.0015, preferably greater than 0.0020.

9. A machine tool (1) comprising a tool positioning system (200) according to any one of Claims 1 to 8.

10. The machine tool (1) according to Claim 9, comprising a tailstock for driving in rotation a bar to be machined along the longitudinal axis of the bar to be machined.

11. The machine tool (1) according to any one of Claims 9 or 10, wherein the tailstock is configured to drive in translation the bar to be machined in a direction parallel to the longitudinal axis of the bar to be machined.

12. The machine tool (1) according to any one of Claims 9 to 11, comprising communications means provided to communicate with communications means of the clamping block.
